# EUROPÄISCHE PATENTSCHRIFT

(11) **EP 2 205 436 B1**
(45) Veröffentlichungstag und Bekanntmachung des Hinweises auf die Patenterteilung: **20.04.2011**
(21) Anmeldenummer: 08843351.1
(22) Anmeldetag: 29.10.2008
(51) Int. Cl.: B32B 27/36, B42D 15/00, B42D 15/10

(54) **VERFAHREN ZUR HERSTELLUNG EINES POLYCARBONAT-SCHICHTVERBUNDES**
METHOD FOR PRODUCING A POLYCARBONATE LAYERED COMPOSITE
PROCÉDÉ DE PRODUCTION D'UN COMPOSITE STRATIFIÉ À BASE DE POLYCARBONATE

(30) Priorität: 31.10.2007 DE 102007052949
(43) Veröffentlichungstag der Anmeldung: 14.07.2010
(73) Patentinhaber: Bundesdruckerei GmbH, 10958 Berlin (DE); Bayer Material Science AG, 51368 Leverkusen (DE)
(72) Erfinder: LEOPOLD, André, 10119 Berlin (DE); MUTH, Oliver, 12277 Berlin (DE); KNEBEL, Michael, 10405 Berlin (DE); SEIDEL, Rainer, 13467 Berlin (DE); EHREKE, Jens, 12587 Berlin (DE); PAESCHKE, Manfred, 16352 Basdorf (DE); PUDLEINER, Heinz, 47800 Krefeld (DE); YESILDAG, Cengiz, 51377 Leverkusen (DE); MEYER, Klaus, 41539 Dormagen (DE)
(74) Vertreter: Jungblut, Bernhard Jakob
(86) Internationale Anmeldenummer: PCT/DE2008/001750
(87) Internationale Veröffentlichungsnummer: WO 2009/056109

(56) Entgegenhaltungen:
- DE-A1- 4 421 561
- DE-A1- 10 013 410

## Beschreibung

### Gebiet der Erfindung

Die Erfindung betrifft ein Verfahren zur Herstellung eines Verbundes mit zumindest einer ersten Polymerschicht sowie einer zweiten Polymerschicht jeweils aus einem Polycarbonat-Polymer auf Basis Bisphenol A, wobei zwischen den Polymerschichten eine Zwischenschicht angeordnet ist, mit den folgenden Verfahrensstufen: die Zwischenschicht wird zumindest in einem Teilbereich der ersten Polymerschicht hierauf angebracht, anschließend wird die zweite Polymerschicht auf die erste Polymerschicht bzw. die Zwischenschicht aufgelegt, und die erste Polymerschicht und die zweite Polymerschicht werden unter Druck, bei einer erhöhten Temperatur und für eine definierte Zeitspanne miteinander laminiert. Die Erfindung betrifft des Weiteren eines in dieser Weise erhältlichen Verbund, die Verwendung des Verfahrens zur Herstellung eines Sicherheits- und/oder Wertdokuments, sowie ein solchermaßen herstellbares Sicherheits- und/oder Wertdokument.

### Hintergrund der Erfindung und Stand der Technik

Kunststoffkarten werden typischerweise durch Lamination von Folien, welche als Polymerschichten ausgebildet sind, hergestellt. Dazu werden unter Druck bei einer Temperatur, die über dem Erweichungspunkt (Glaspunkt) der polymerschichten liegt, ein inniger Verbund zwischen den polymerschichten hergestellt, indem sich die über dem Glaspunkt beweglichen Polymerketten miteinander mischen und im Idealfall ein untrennbarer, monolithischer Verbund aus den Polymerschichten erhalten wird.

Diese Polymerschichten können zum Teil mit zusätzlichen Merkmalen ausgestattet sein, z.B. sind Pigmentierungen zum Optimieren von Schwärzungsgraden bei der Lasergravur enthalten.

Zwischen den Polymerschichten sind in der Regel zusätzliche Elemente vorgesehen, insbesondere kann auf einer der Polymerschichten und im fertigen Verbund zwischen den Polymerschichten liegend eine Zwischenschicht, beispielsweise Druckschicht in der Ausführung als Sicherheitsdruckelemente, wie Guillochen, Mikroschrift usw. oder Spezialfarben wie OVI-Farbe u.dgl. eingerichtet sein. Eine Zwischenschicht kann aber auch beispielsweise eine Folie mit diffraktiven Elementen als Sicherheitsmerkmal sein. Insbesondere ist es auch möglich, ein photographisch erzeugtes Lichtbild als Zwischenschicht zwischen die Polymerschichten einzubringen. Ein Verfahren hierzu ist in der Literaturstelle DE 10 2007 018 450.8 beschrieben. Eine solche Zwischenschicht kann nur einen Teil der unterliegenden und/oder überliegenden Polymerschicht bedecken bzw. unterliegen, aber auch mit diesen deckungsgleich gestapelt sein.

Allen diesen Ausführungsformen ist gemeinsam, dass die Zwischenschicht den oben genannten Prozess der Lamination stören kann, insbesondere wenn die Zwischenschicht inkompatibel mit den zu fügenden Polymerschichten ist. Diese Inkompatibilität kann darin bestehen, dass die Zwischenschicht den Prozess der Vermischung der erweichten polymerschichten als Trennschicht behindert.

So zeigt sich beispielsweise, dass Druckschichten in der Regel auf dem eigentlichen Drucksubstrat, der ersten Polymerschicht, beim fertigen Verbund hervorragend haften, die Haftung zur zweiten und im Zuge der Lamination auf die Druckschicht aufgebrachten zweiten Polymerschicht demgegenüber schlechter ist, und folglich zwischen der Zwischenschicht und der zweiten Polymerschicht Delamination eintreten kann. Die Schwachstelle liegt also an der Grenzfläche zwischen der Druckschicht und der aufgelegten und auflaminierten zweiten Polymerschicht. Besonders kritisch kann dies bei vollflächigen Bedruckungen auf der ersten Polymerschicht werden.

Aus der Literaturstelle EP 0688839 A2 sind Polycarbonate auf Basis eines geminal disubstituierten Dihydroxydiphenylcycloalkans per se bekannt. In diesem Stand der Technik werden solche Polycarbonate als Bindemittel von Siebdruckfarben eingesetzt. Dieser Literaturstelle sind auch Verfahren zur Herstellung solcher Polycarbonate entnehmbar. Diese Literaturstelle wird hiermit vollumfänglich in den Offenbarungsgehalt der vorliegenden Anmeldung aufgenommen.

### Technisches Problem der Erfindung

Der Erfindung liegt daher das technische Problem zu Grunde, ein Verfahren zum Einlaminieren einer mit polycarbonat-Polymerschichten nicht oder nur reduziert kompatiblen Zwischenschicht zwischen eben solche polycarbonat-Polymerschichten anzugeben, welches einen Verbund ergibt, der eine bessere Sicherheit gegen Delamination und folglich eine sehr hohe Integrität und Haltbarkeit des erzeugten Verbundes gewährleistet.

### Grundzüge der Erfindung und bevorzugte Ausführungsformen

Zur Lösung dieses technischen Problems lehrt die Erfindung ein Verfahren zur Herstellung eines Verbundes mit zumindest einer ersten Polymerschicht sowie einer zweiten Polymerschicht, jeweils aus einem Polycarbonat-Polymer auf Basis Bisphenol A, wobei zwischen der ersten Polymerschicht und der zweiten Polymerschicht eine Zwischenschicht angeordnet ist, mit den folgenden Verfahrensstufen: a) auf zumindest einen Teilbereich der ersten Polymerschicht wird die Zwischenschicht aufgebracht, b) optional wird die Zwischenschicht getrocknet, c) die erste Polymerschicht wird auf der Seite, auf welcher die Zwischenschicht angeordnet ist, zumindest teilweise mit einer flüssigen Zubereitung enthaltend ein Lösungsmittel oder ein Lösungsmittelgemisch sowie ein Polycarbonatderivat auf Basis eines geminal disubstituierten Dihydroxydiphenylcycloalkans, beschichtet, wobei die Zubereitung die Zwischenschicht abdeckt, vorzugsweise vollständig, d) optional erfolgt anschließend an Stufe c) eine Trocknungsverfahrensstufe, e) anschließend an Stufe c) oder Stufe d) wird die zweite Polymerschicht auf die erste Polymerschicht, die zwischenschicht abdeckend, aufgelegt, f) die erste Polymerschicht und die zweite Polymerschicht werden unter Druck, bei einer Temperatur von 120 °C bis 230 °C und für eine definierte Zeitspanne miteinander laminiert.

Die Erfindung beruht zunächst auf der Erkenntnis, dass erfindungsgemäß eingesetzte Polycarbonatderivate hochkompatibel mit Polycarbonatwerkstoffen für Folien, insbesondere mit Polycarbonaten auf Basis Bisphenol A, wie beispielsweise Makrofol® Folien, sind. Die hohe Kompatibilität zeigt sich darin, dass sich die erfindungsgemäß eingebrachte Schicht mit einem Polycarbonatderivat mit den Polycarbonatwerkstoffen der Folien zu einem monolithischen Verbund fügt. Eine Schichtgrenze zwischen den Materialien ist nach dem Laminieren optisch nicht mehr zu detektieren.

Überraschenderweise wurde aber zudem gefunden, dass durch Zwischenschaltung einer Schicht mit einem erfindungsgemäß eingesetzten Polycarbonatderivat zwischen die (bereits auf die erste Polymerschicht aufgebrachte und an dieser gut haftenden) Zwischenschicht und die zweite Polymerschicht auch eine gute Haftung der Zwischenschicht mit der zweiten Polymerfolie erreicht wird, und zwar insbesondere auch bei Werkstoffen der Zwischenschicht, welche nicht Polymere auf Basis von Bisphenol A oder des Polycarbonatderivats sind.

Insgesamt ergibt sich ein in der Integrität und Haltbarkeit deutlich verbesserter Verbund.

Ein weiterer Vorteil der Erfindung ist, dass die erfindungsgemäß eingesetzten flüssigen Zubereitungen, insbesondere Lösungen, drucktechnisch aufbringbar sind und daher im Rahmen der einschlägig bekannten Druckverfahren (z.B. Durch-, Tief-, Hoch- und Flachdruck aber auch Tintenstrahldruck) mit den entsprechenden niedrigen Schichtstärken appliziert werden können. Handelsübliche Klebesysteme (z.B. auf Basis von Epoxiden) könnten demgegenüber theoretisch zwar auch gedruckt werden, würden sich aber beim Laminieren verfärben oder ihre adhäsiven Eigenschaften verlieren.

Grundsätzlich können im Rahmen der Erfindung Zwischenschichten aus beliebigen Materialien und beliebiger Natur eingesetzt werden. So kann die Zwischenschicht beispielsweise eine Druckschicht, insbesondere mit einem Sicherheitsdruckelement und/oder einer gedruckten fotographische Darstellung, eine fotographische Emulsion, und/oder eine Folie, insbesondere eine diffraktive Sicherheitsfolie, sein. In Frage kommen alle dem Fachmann des Gebietes der Sicherheits- und/oder Wertdokumente bekannten Zwischenschichten. In diesem Zusammenhang ist anzumerken, dass der Begriff der Zwischenschicht selbstverständlich auch eine Vielzahl von benachbarten kleinen Elementen, wie beispielsweise die Rasterpunkte einer Druckschicht, umfasst.

Die Zwischenschicht kann vollflächig auf der ersten Polymerschicht eingerichtet werden. Es ist aber auch möglich, dass die Zwischenschicht nur in einem Teilbereich der Oberfläche der ersten Polymerschicht eingerichtet ist. Gleichfalls kann die Zubereitung vollflächig auf die mit der Zwischenschicht versehene erste Polymerschicht aufgebracht werden, oder nur teilweise, wobei jedoch wesentlich ist, dass die Zwischenschicht vollständig abgedeckt ist.

Der Druck in Stufe f) liegt typischerweise im Bereich von 1 Bar bis 10 Bar, insbesondere im Bereich von 3 Bar bis 7 Bar. Die Temperatur in Stufe f) liegt vorzugsweise im Bereich 140 °C bis 200°C, insbesondere im Bereich von 150 °C bis 180 °C. Die Dauer der Stufe e) kann im Bereich von 0,5 s bis 120 s, insbesondere 5 s bis 60 s, liegen, ist aber für die Erfindung nicht relevant.

In Stufe d) kann bei einer Temperatur im Bereich 20 °C bis 120 °C, insbesondere 60 °C bis 120 °C, vorzugsweise 80 °C bis 110 °C, für eine Dauer von zumindest 1 min., vorzugsweise 5 min. bis 600 min., insbesondere 10 min. bis 120 min., getrocknet werden. Sofern die Zwischenschicht beispielsweise eine Druckschicht ist, kann bei Anwendung der optionalen Stufe b) mit entsprechenden Temperaturen und/oder Dauern gearbeitet werden, wobei die Temperatur aber auch stattdessen weniger als 60 °C, beispielsweise 20 °C bis 60 °C, und die Dauer alternativ auch unter 1 min., beispielsweise 1 s bis 60 s, liegen kann.

Die in Stufe c) erzeugte Schichtdicke (vor oder nach dem Trocknen) liegt beispielsweise im Bereich von 0,1 µm bis 30 µm, vorzugsweise von 1 µm bis 10 µm, insbesondere von 2 µm bis 5 µm.

Die eingesetzten Polymerschichten können eine Dicke im Bereich von 20 µm bis 1000 µm, insbesondere 50 µm bis 300 µm, aufweisen. Die Zwischenschicht kann eine Dicke von 0,1 µm bis 1000 µm, insbesondere von 1 µm bis 50 µm, aufweisen. Insbesondere Druckschichten werden typischerweise eine Schichtdicke im Bereich von 1 µm bis 30 µm aufweisen. Demgegenüber werden photographische Emulsionen und/oder andere Folien, wie diffraktive Sicherheitsfolien eher Schichtdicken im Bereich 5 µm bis 1000 µm, insbesondere 10 µm bis 100 µm, aufweisen.

Bevorzugt ist es, wenn das Polycarbonatderivat ein mittleres Molekulargewicht (Gewichtsmittel) von mindestens 10.000, vorzugsweise von 20.000 bis 300.000, aufweist.

Im Einzelnen kann das Polycarbonatderivat funktionelle Carbonatstruktureinheiten der Formel (I) enthalten, 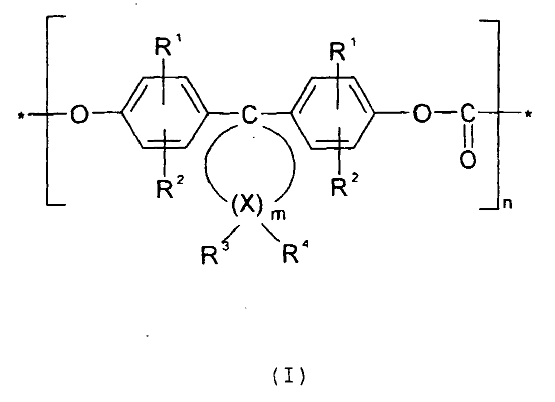 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl; m eine ganze Zahl von 4 bis 7, bevorzugt 4 oder 5; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Massgabe, dass an mindestens einem Atom X, R³ und R⁴ gleichzeitig Alkyl bedeuten.

Weiterhin bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu Cl können mit Alkyl disubstituiert sein. Bevorzugt ist m = 4 oder 5. Das Polycarbonatderivat kann beispielsweise auf Basis von Monmeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein.

Ein erfindungsgemäßes Polycarbonatderivat kann beispielsweise gemäß der Literaturstelle DE 38 32 396.6 aus Diphenolen der Formel (Ia) hergestellt werden, deren Offenbarungsgehalt hiermit vollumfänglich in den Offenbarungsgehalt dieser Beschreibung aufgenommen wird.

Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und parametern, wie in Formel I).

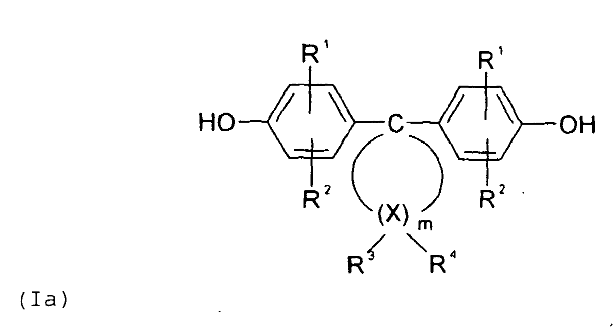

Ausserdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha , alpha '-Bis-(hydroxyphenyl)-diisopropylbenzole sowie deren kernalkylierte und kernhalogenierte Verbindungen.

Diese und weitere geeignete Diphenole sind z.B. in den Literaturstellen US-A 3 028 365, 2 999 835, 3 148 172, 3 275 601, 2 991 273, 3 271 367, 3 062 781, 2 970 131 und 2 999 846, in den Literaturstellen DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben, welche hiermit vollumfänglich in den Offenbarungsgehalt der vorliegenden Anmeldung aufgenommen werden.

Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen.

Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäss eingesetzten Polycarbonatderivate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 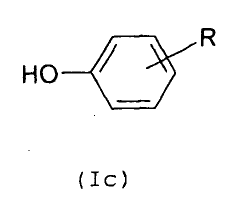 worin
R einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonatderivate können linear oder verzweigt sein, sie sind Homopolycarbonate oder Copolycarbonate auf Basis der Diphenole der Formel (Ia).

Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten.

Eine besonders vorteilhafte Ausführungsform der Erfindung ist dadurch gekennzeichnet, dass das Polycarbonatderivat ein Copolymer enthaltend, insbesondere bestehend aus, Monomereinheiten M1 auf Basis der Formel (Ib), insbesondere Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,4, beispielsweise größer als 0,5 ist. Denn bei solchen Copolymeren wurde überraschenderweise festgestellt, dass die Glastemperatur nach einem ersten Aufheizzyklus von T_{g} unter 150 °C bei einem zweiten Aufheizzyklus erhöht sein kann, was die Stabilität des erhaltenen Verbundes deutlich erhöhen kann.

Ganz besonders bevorzugt ist eine flüssige Zubereitung enthaltend: A) 1 bis 30 Gew.-%, vorzugsweise 10 bis 25 Gew.-%, insbesondere 15 bis 20 Gew.-%, eines erfindungsgemäß eingesetzten Polycarbonatderivates, und B) 70 bis 99 Gew.-%, vorzugsweise 75 bis 90 Gew.-%, insbesondere 80 bis 85 Gew.-%, eines organischen Lösungsmittels oder Lösungsmittelgemisches.

Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4-Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxypropionat. Ganz besonders bevorzugt sind: Mesitylen (1,3,5-Trimethylbenzol), 1,2,4-Trimethylbenzol, Cumol (2-phenylpropan), Solvent Naptha und Ethyl-3-ethoxypropionat.

Ein geeignetes Lösungsmittelgemisch umfasst beispielsweise A) 0 bis 10 Gew.-%, vorzugsweise 1 bis 5 Gew.-%, insbesondere 2 bis 3 Gew.-%, Mesitylen, B) 10 bis 50 Gew.-%, vorzugsweise 25 bis 50 Gew.-%, insbesondere 30 bis 40 Gew.-%, 1-Methoxy-2-propanolacetat, C) 0 bis 20 Gew.-%, vorzugsweise 1 bis 20 Gew.-%, insbesondere 7 bis 15 Gew.-%, 1,2,4-Trimethylbenzol, D) 10 bis 50 Gew.-%, vorzugsweise 25 bis 50 Gew.-%, insbesondere 30 bis 40 Gew.-%, Ethyl-3-ethoxypropionat, E) 0 bis 10 Gew.-%, vorzugsweise 0,01 bis 2 Gew.-%, insbesondere 0,05 bis 0,5 Ges.-%, Cumol, und 0 bis 80 Gew.-%, vorzugsweise 1 bis 40 Gew.-%, insbesondere 15 bis 25 Gew.-%, Solvent Naphtha, wobei die Summe der Komponenten A) bis E) stets 100 Gew.-% ergibt.

Typischerweise weisen die erste Polycarbonatschicht und die zweite Polycarbonatschicht eine Glastemperatur T_{g} von mehr als 145 °C, insbesondere mehr als 147 °C, auf.

Die Erfindung betrifft des Weiteren einen Verbund, der mit einem erfindungsgemäßen Verfahren erhältlich ist. Als strukturelle Merkmale kann ein solcher Verbund eine erste Polycarbonatschicht, eine zweite Polycarbonatschicht, ein zwischen der ersten Polycarbonatschicht und der zweiten Polycarbonatschicht angeordneten Zwischenschicht und eine die Zwischenschicht mit der zweiten Polycarbonatschicht verbindenden Zubereitungsschicht enthaltend ein polycarbonatderivat auf Basis eines geminal disubstituierten Dihydroxydiphenylcycloalkans aufweisen, wobei die Polycarbonatschichten und die Zwischenschicht jeweils stoffschlüssig miteinander verbunden sein können.

Die Erfindung betrifft des Weiteren die Verwendung eines erfindungsgemäßen Verfahrens zur Herstellung eines Sicherheits- und/oder Wertdokuments, wobei optional gleichzeitig mit, oder vor oder nach der Herstellung des Verbundes die erste Polycarbonatschicht und/oder die zweite Polycarbonatschicht mit zumindest einer weiteren Schicht, beispielsweise einer Tragschicht, direkt oder indirekt verbunden wird. Als Sicherheits- und/oder Wertdokument seien beispielhaft genannt: Personalausweise, Reisepässe, ID-Karten, Zugangskontrollausweise, Visa, Steuerzeichen, Tickets, Führerscheine,

Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise zumindest ein Substrat, eine Druckschicht und optional eine transparente Deckschicht auf. Substrat und Deckschicht können ihrerseits aus einer Mehrzahl von Schichten bestehen. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder (organischer) Polymerbasis in Frage. Ein solches Sicherheits- und/oder Wertdokument umfasst innerhalb des Gesamt-Schichtverbundes einen erfindungsgemäßen Verbund. Neben dem erfindungsgemäßen Verbund kann noch zumindest eine (ggf. zusätzliche) Druckschicht eingerichtet sein, welche zwischen den beiden Polymerschichten, auf einer äußeren Fläche des Verbundes oder auf einer mit dem Verbund verbundenen weiteren Schicht angebracht sein kann.

Im Folgenden wird die Erfindung anhand von nicht limitierenden Ausführungsbeispielen näher erläutert.

Es zeigen:

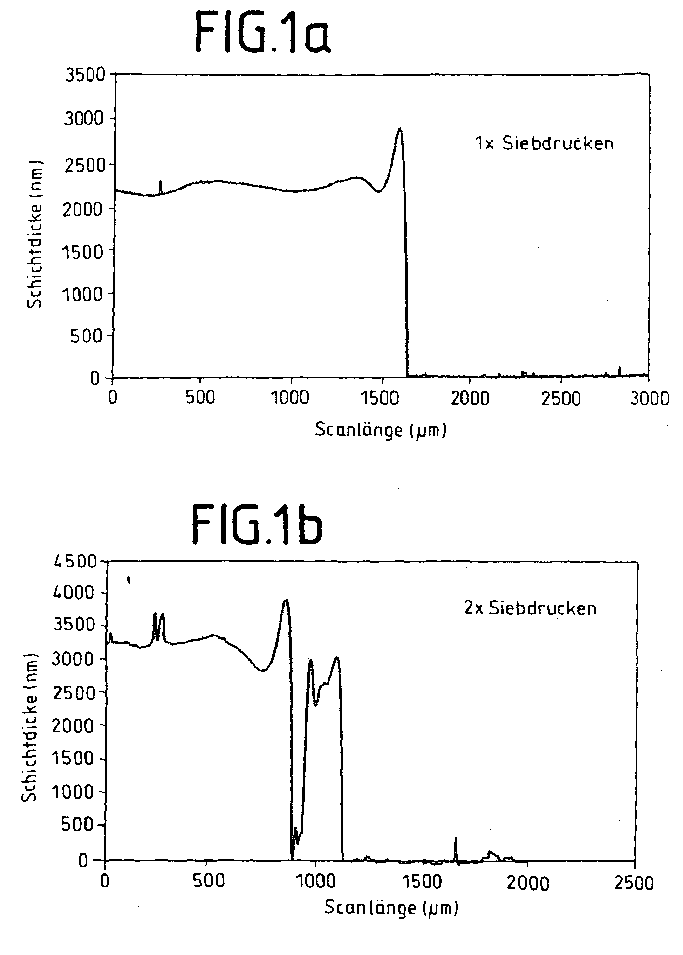

- Figur 1:: Schichtdickenmessungen an einer drucktechnisch erzeugten Schicht mit erfindungsgemäße eingesetzter Zubereitung, nach einmaligem Drucken (Fig. 1a) und nach zweimaligem Drucken (Fig. 1b), und
- Figur 2:: Prozessablauf der Herstellung eines Schichtverbundes mit einer Druckschicht,

### Beispiel 1: Herstellung von erfindungsgemäß einsetzbaren Polycarbonatderivaten

Bevorzugt sind die Polycarbonatderivate der Beispiele 1.3 bis 1.5.

### Beispiel 1.1: Herstellung eines ersten Polycarbonatderivats 205,7 g (0,90 Mol) Bisphenol A (2,2-Bis-(4-hydroxyphenyl)-propan, 30,7 g (0,10 Mol) 1,1-Bis-(4-hydroxyphenyl)-3,3,5-trimethylcyclohexan, 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung würden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigte eine relative Lösungsviskosität von 1,255. Die Glastemperatur wurde zu 157°C bestimmt (DSC).

### Beispiel 1.2: Herstellung eines zweiten Polycarbonatderivats

Analog dem Beispiel 1 wurde eine Mischung aus 181,4 g (0,79 Mol) Bisphenol A und 63,7 g (0,21 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,263. Die Glastemperatur wurde zu 167 °C bestimmt (DSC).

### Beispiel 1.3: Herstellung eines dritten Polycarbonatderivats

Analog dem Beispiel 1 wurde eine Mischung von 149,0 g (0,65 Mol) Bisphenol A (2,2-Bis-(4-hydroxyphenyl)-propan und 107,9 g (0,35 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,263. Die Glastemperatur wurde zu 183 °C bestimmt (DSC).

### Beispiel 1.4: Herstellung eines vierten Polycarbonatderivats

Analog dem Beispiel 1 wurde eine Mischung aus 91,6 g (0,40 Mol) Bisphenol A und 185,9 g (0,60 Mol) 1,1-bis-(4-hydroxyphenyl)-3,3,5-trimethylcyclohexan zum Polycarbonatderivat umgesetzt.

Das Polycarbonatderivat zeigte eine relative Lösungsviskosität von 1,251. Die Glastemperatur wurde zu 204 °C bestimmt (DSC).

### Beispiel 1.5: Herstellung eines fünften Polycarbonatderivats

Wie in Beispiel 1 wurde eine Mischung aus 44,2 g (0,19 Mol) Bisphenol A und 250,4 g (0,81 Mol) 1,1-bis-(4-hydroxyphenyl)-3,3,5-trimethylcyclohexan zum Polycarbonat umgesetzt.

Das Polycarbonatderivat zeigte eine relative Lösungsviskosität von 1,248. Die Glastemperatur wurde zu 216 °C bestimmt (DSC).

### Beispiel 2: Herstellung von erfindungsgemäß einsetzbaren flüssigen Zubereitungen

Es wurden die folgenden verschiedenen flüssigen Zubereitungen hergestellt:
Eine erste flüssige Zubereitung wurde aus 17,5 Gew.-Teile des Polycarbonatderivats aus Beispiel 1.3 und 82,5 Gew.-Teile eines Lsgm.-Gemisches gemäß Tabelle I hergestellt.

**Tabelle I**

| | |
|---|---|
| Mesitylen | 2,4 |
| 1-Methoxy-2-propanolacetat | 34,95 |
| 1,2,4-Trimethylbenzol | 10,75 |
| Ethyl-3-ethoxypropionat | 33,35 |
| Cumol | 0,105 |
| Solvent Naphtha | 18,45 |

Es wurde eine farblose, hochviskose Lösung mit einer Lösungsviskosität bei Raumtemperatur von 800m Pas erhalten.
Weitere flüssige Zubereitungen wurden gemäß der folgenden Tabelle II hergestellt.

**Tabelle II**

| **Einsatzstoff** | **Gew. %** | **Gew. %** | **Gew. %** | **Gew. %** | **Gew. %** | **Gew. %** | **Gew. %** |
|---|---|---|---|---|---|---|---|
| Lsgm. -Gemisch aus Tab. I | 90 | 90 | 90 | 95 | 95 | | |
| Aceton | | | | | | 95 | |
| Butanon | | | | | | | 95 |
| Beispiel 1.3 | 10 | | | | | 5 | 5 |
| Beispiel 1.4 | | 10 | | | | | |
| Beispiel 1.5 | | | 10 | | | | |
| Beispiel 1.2 | | | | 5 | | | |
| Beispiel 1.1 | | | | | 5 | | |

Die Zubereitungen der Tabelle II wurden zum Zwecke der Bestimmung der Erweichungstemperaturen auf Glasplatten aufgerakelt, so dass sich Trockenschichtdicken von 5 µm ergaben. Die Beschichtungen wurden 1 Stunde bei 100°C im Vakuumtrockenschrank getrocknet. Anschließend wurden die getrockneten Filme von der Glasplatte abgelöst und mittels Differential Scanning Calometry (DSC) untersucht.

An den Filmen wurden die folgenden thermischen Umwandlungstemperaturen gemessen:

| Polymer aus | Lösungsmittel | 1. Aufheizen [°C] | Kühlen [°C] | 2. Aufheizen [°C] | Delta 1. Aufheizen/2. Aufheizen |
|---|---|---|---|---|---|
| Beispiel 1.1 | Kohlenwasserstoff-Gemisch | 112,41 | | 113,88 | 1,47 |
| Beispiel 1.2 | Kohlenwasserstoff-Gemisch | 143,02 | 144,29 | 144,28 | 1,26 |
| Beispiel 1.3 | Kohlenwasserstoff-Gemisch | 128,54 | 171,56 | 176,45 | 47,89 |
| Beispiel 1.4 | Kohlenwasserstoff-Gemisch | 172,45 | 188,22 | 191,68 | 19,23 |
| Beispiel 1.5 | Kohlenwasserstoff-Gemisch | 170,39 | 207,20 | 207,06 | 36,67 |
| Beispiel 1.3 | Aceton | 165,80 | 155,40 | 157,22 | -8,58 |
| Beispiel 1.3 | Butanon | 174,21 | 172,20 | 179,11 | 4,9 |

Dabei ist bemerkenswert, dass beispielsweise der Film aus Beispiel 1.3 nach Trocknung beim 1. Aufheizen eine Erweichungstemperatur von 128,54 °C zeigt. Erst beim Abkühlen und 2. Aufheizen werden erwartete Übergänge bei 171, 56 bzw. 176, 45°C beobachtet.

Aufgrund der guten Löslichkeit beispielsweise des Polycarbonatderivats aus Beispiel 1.3 in halogenfreien Lösungsmitteln und dem festgestellten Erweichungsverhalten getrockneter Filme ist dieses Material hervorragend geeignet, als Haftvermittler in polycarbonatbasierten Verbundwerkstoffen, insbesondere sogenannten Smart Cards zu dienen.

### Beispiel 3: Herstellung erfindungsgemäßer Verbunde

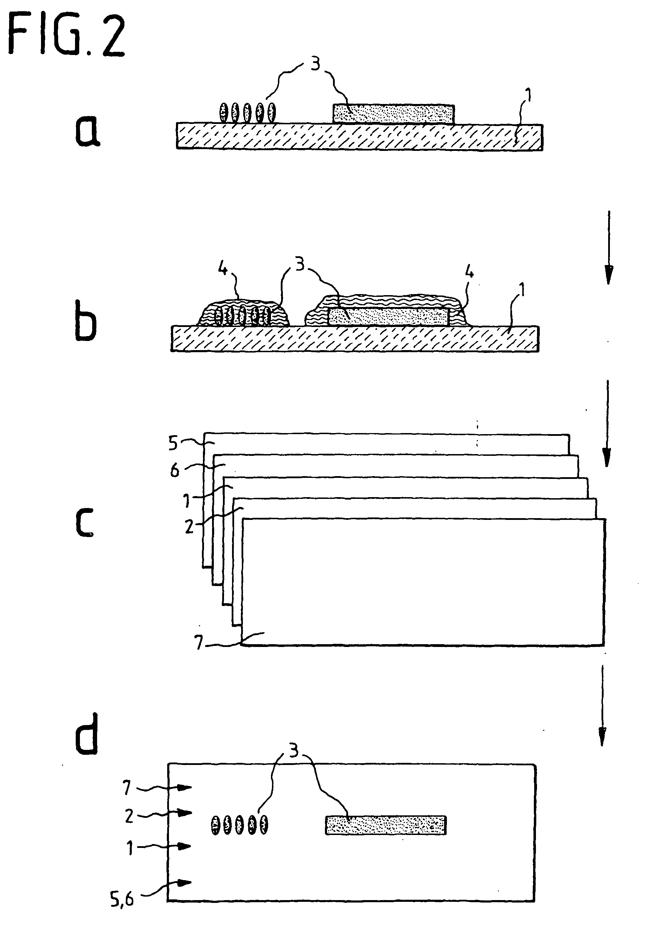

Eine Polycarbonatfolie 1 Makrofol ® 6-2 (Dicke ca. 100 µm) wird mit einer Zwischenschicht 3, im Ausführungsbeispiel eine Druckschicht 3, belegt (Figur 2a), beispielsweise mittels Offset- oder Siebdruck. Dabei ist linksseitig eine Drückschicht aus einem gerastertem Druck ersichtlich, während rechtsseitig eine Druckschicht 3 aus einem vollflächigen Druck dargestellt ist. Die Druckschicht 3 wird ggf. zunächst getrocknet. Dann wird die mit der Druckschicht 3 versehene Seite der Polycarbonatfolie 1 beispielsweise durch Siebdruck mit einer Zubereitungsschicht 4 aus einer Zusammensetzung des Beispiels 2, beispielsweise auf Basis des Polycarbonatderivats gemäß Beispiel 1.3 und dem Lösungsmittelgemisch gemäß Tabelle I, versehen (Figur 2b). Dies kann entweder vollflächig, oder, wie gezeigt, lediglich partiell, und zwar die Bereiche der Druckschicht 3 abdeckend, erfolgen. Der Siebdruck erfolgt ein- oder zweimal. Dann erfolgt eine Trocknung unter Luftatmosphäre bei 100 °C für 60 min. Es resultiert eine Schichtdicke von ca. 2,2 µm oder 3,3 µm des getrockneten Polycarbonatderivats (Figur 2b). Sodann wird die Seite der polycarbonatfolie 1 mit der Druckschicht 3 und der Zubereitungsschicht 4 mit einer weiteren Polycarbonatfolie 2 Makrofol ® 6-2 (Dicke ca. 100 µm) bedeckt und der so entstandene Verbund wird mit ggf. weiteren gestapelten Polymerschichten 5, 6, 7 in einer üblichen industriellen Laminierpresse unter Einwirkung üblichen Drucks (ca. 5 Bar) und bei gut 160 °C laminiert (Figuren 2c und 2d).

Eine optische Untersuchung des Verbundes ergab keinerlei erkennbare Phasengrenze. Der Verbund zeigte sich als monolithischer Block.

Vergleichsversuche wurden in entsprechender Weise durchgeführt, wobei jedoch die Zubereitungsschicht 4 weggelassen wurde. Dabei zeigte sich, dass ein erfindungsgemäßer Verbund deutlich stabiler gegen Delamination zwischen der Druckschicht 3 und der zweiten Polymerschicht 2 ist, als in besagten Vergleichsversuchen, die dem Stand der Technik entsprechen.

## Patentansprüche

1. Verfahren zur Herstellung eines Verbundes mit zumindest einer ersten Polymerschicht (1) sowie einer zweiten Polymerschicht (2), jeweils aus einem Polycarbonat-Polymer auf Basis Bisphenol A, wobei zwischen der ersten Polymerschicht (1) und der zweiten Polymerschicht (2) eine Zwischenschicht (3) angeordnet ist, mit den folgenden Verfahrensstufen:
a) auf zumindest einen Teilbereich der ersten Polymerschicht (1) wird die Zwischenschicht (3) aufgebracht,
b) optional wird die Zwischenschicht (3) getrocknet,
c) die erste Polymerschicht (1) wird auf der Seite, auf welcher die Zwischenschicht (3) angeordnet ist, mit einer flüssigen Zubereitung enthaltend ein Lösungsmittel oder ein Lösungsmittelgemisch sowie ein Polycarbonatderivat auf Basis eines geminal disubstituierten Dihydroxydiphenylcycloalkans, beschichtet, wobei die Zubereitung die Zwischenschicht (3) abdeckt,
d) optional erfolgt anschließend an Stufe c) eine Trocknungsverfahrensstufe,
e) anschließend an Stufe c) oder Stufe d) wird die zweite Polymerschicht (2) auf die erste Polymerschicht (1), die Zwischenschicht (3) abdeckend, aufgelegt,
f) die erste Polymerschicht (1) und die zweite Polymerschicht (2) werden unter Druck, bei einer Temperatur von 120 °C bis 230 °C und für eine definierte Zeitspanne miteinander laminiert.

2. Verfahren nach Anspruch 1, wobei die Zwischenschicht (2) eine Druckschicht, insbesondere mit einem Sicherheitsdruckelement und/oder einer gedruckten fotographische Darstellung, eine fotographische Emulsion, und/oder eine Folie, insbesondere eine diffraktive Sicherheitsfolie, ist.

3. Verfahren nach Anspruch 1 oder 2, wobei das Polycarbonatderivat ein mittleres Molekulargewicht (Gewichtsmittel) von mindestens 10.000, vorzugsweise von 20.000 bis 300.000, aufweist.

4. Verfahren nach einem der Ansprüche 1 bis 3, wobei das Polycarbonatderivat funktionelle Carbonatstruktureinheiten der Formel (I) enthält, 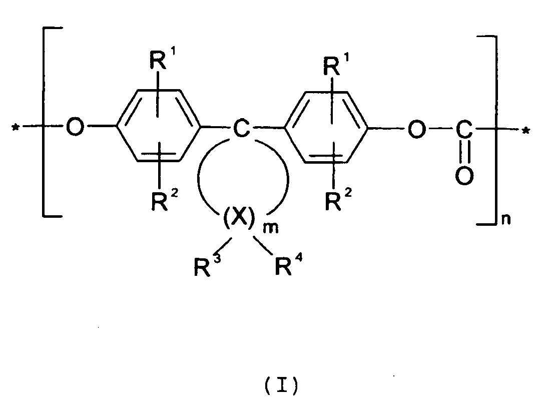 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl
X Kohlenstoff und
n eine ganze Zahl größer 20 bedeuten,
mit der Massgabe, dass an mindestens einem Atom X, R³ und R⁴ gleichzeitig Alkyl bedeuten.

5. Verfahren nach Anspruch 4, wobei an 1 bis 2 Atomen X, insbesondere nur an einem Atom X, R³ und R⁴ gleichzeitig Alkyl sind und/oder wobei R³ und R⁴ Methyl sind und/oder wobei die X-Atome in alpha-Stellung zu dem Diphenyl-substituierten C-Atom (C1) nicht dialkylsubstituiert sind und/oder wobei die X-Atome in beta-Stellung zu C1 mit Alkyl disubstituiert sind und/oder wobei m = 4 oder 5 ist.

6. Verfahren nach einem der Ansprüche 4 oder 5, wobei das Polycarbonatderivat auf Basis 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol ist.

7. Verfahren nach einem der Ansprüche 1 bis 6, wobei das Polycarbonatderivat ein Copolymer enthaltend, insbesondere bestehend aus, Monomereinheiten M1 auf Basis der Formel (Ib) sowie Monomereinheiten M2 auf Basis des geminal disubstituierten Dihydroxydiphenylcyclo-alkans, vorzugsweise des 4,4'-(3,3,5-trimethylcyclo-hexan-1,1-diyl)diphenols, ist, wobei das Molverhältnis M2/M1 vorzugsweise größer als 0,3, insbesondere größer als 0,40, vorzugsweise größer als 0,50, ist.

8. Verfahren nach einem der Ansprüche 1 bis 7, wobei die Temperatur in Stufe f) im Bereich von 140 °C bis 200 °C, insbesondere im Bereich von 150 C bis 180 °C, ist.

9. Verfahren nach einem der Ansprüche 1 bis 8, wobei die erste Polycarbonatschicht (1) und die zweite Polycarbonatschicht (2) eine Glastemperatur T_{g} von mehr als 145 °C aufweisen.

10. Verfahren nach einem der Ansprüche 1 bis 9, wobei die Dicke der ersten Polycarbonatschicht (1) und der zweiten Polycarbonatschicht (2), gleich oder verschieden, im Bereich von 10 bis 1000 µm, insbesondere von 20 bis 200 µm, liegt und/oder wobei die Dicke, gemessen in Richtungen orthogonal zu einer Hauptfläche einer Polycarbonatschicht (1, 2), der Zwischenschicht (3) im Bereich 0,1 bis 1000 µm, insbesondere 1 bis 50 µm, liegt.

11. Verbund erhältlich nach einem der Ansprüche 1 bis 10.

12. Verbund enthaltend eine erste Polycarbonatschicht (1), eine zweite Polycarbonatschicht (2), ein zwischen der ersten Polycarbonatschicht (1) und der zweiten Polycarbonatschicht (2) angeordneten Zwischenschicht (3) und eine die Zwischenschicht (3) mit der zweiten Polycarbonatschicht (2) verbindenden Zubereitungsschicht (4) enthaltend ein Polycarbonatderivat auf Basis eines geminal disubstituierten Dihydroxydiphenylcycloalkans.

13. Verwendung eines Verfahrens nach einem der Ansprüche 1 bis 10 zur Herstellung eines Sicherheits- und/oder Wertdokuments, wobei optional gleichzeitig mit, oder vor oder nach der Herstellung des Verbundes die erste Polycarbonatschicht (1) und/oder die zweite Polycarbonatschicht (2) mit zumindest einer weiteren Schicht, beispielsweise einer Tragschicht, direkt oder indirekt verbunden wird.

14. Sicherheits- und/oder Wertdokument erhältlich nach Anspruch 13.

15. Sicherheits- und/oder Wertdokument enthaltend einen Verbund nach Anspruch 11 oder 12.

## Claims

1. A method for producing a composite comprising at least one first polymer layer (1) and a second polymer layer (2), each being made of a polycarbonate polymer based on bisphenol A, an intermediate layer (3) being disposed between the first polymer layer (1) and the second polymer layer (2), the method comprising the following steps:
a) the intermediate layer (3) is applied to at least one partial region of the first polymer layer (1),
b) optionally the intermediate layer (3) is dried,
c) on the side on which the intermediate layer (3) is disposed, the first polymer layer (1) is coated with a liquid preparation containing a solvent, or a solvent mixture, and a polycarbonate derivative based on a geminally disubstituted dihydroxydiphenyl cycloalkane, the preparation covering the intermediate layer (3),
d) optionally, after step c) a drying step is carried out,
e) after step c) or step d), the second polymer layer (2) is placed onto the first polymer layer (1), covering the intermediate layer (3),
f) the first polymer layer (1) and the second polymer layer (2) are laminated to each other under pressure, at a temperature of 120°C to 230°C and for a defined time period.

2. The method according to claim 1, wherein the intermediate layer (2) is a printing layer, in particular with a security printing element and/or a printed photographic representation, a photographic emulsion, and/or a film, in particular a diffractive security film.

3. The method according to claim 1 or 2, wherein the polycarbonate derivative has an average molecular weight (mean weight) of at least 10,000, preferably from 20,000 to 300,000.

4. The method according to one of claims 1 to 3, wherein the polycarbonate derivative contains functional carbonate structural units of Formula (I), 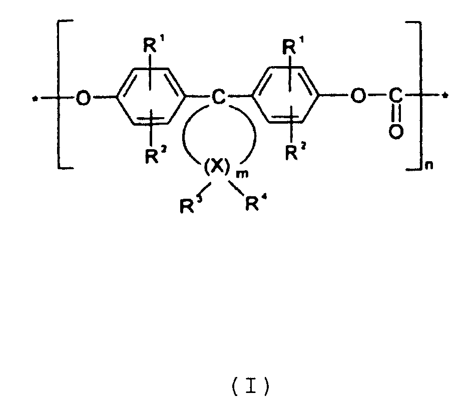 wherein
R¹ and R² independently of one another represent hydrogen, halogen, preferably chlorine or bromine, C₁-C₈ alkyl, C₅-C₆ cycloalkyl, C₆-C₁₀ aryl, preferably phenyl, and C₇-C₁₂ aralkyl, preferably phenyl C₁-C₄ alkyl, in particular benzyl,
m is an integer from 4 to 7, preferably 4 or 5,
R3 and R4 are individually selectable for each X, independently of one another hydrogen or C₁-C₆ alkyl,
X is carbon, and
n is an integer greater than 20,
with the proviso that R³ and R⁴ on at least one X atom are simultaneously alkyl.

5. The method according to claim 4, wherein R³ and R⁴ on 1 to 2 X atoms, in particular only on one X atom, are simultaneously alkyl, and/or wherein R³ and R⁴ are methyl and/or wherein the X atoms in the alpha position to the diphenyl-substituted C atom (C1) are not substituted with dialkyl and/or wherein the X atoms in the beta position to C1 are disubstituted with alkyl and/or wherein m = 4 or 5.

6. The method according to one of claims 4 or 5, wherein the polycarbonate derivative is based on 4,4'-(3,3,5-trimethylcyclohexan-1,1-diyl)diphenol, 4,4'-(3,3-dimethylcyclohexan-1,1-diyl)diphenol, or 4,4'-(2,4,4-trimethylcyclopentan-1,1-diyl)diphenol.

7. The method according to one of claims 1 to 6, wherein the polycarbonate derivative is a copolymer containing, in particular consisting of monomer units M1 based on Formula (Ib), as well as monomer units M2 based on the geminally disubstituted dihydroxy diphenyl cycloalkane, preferably of the 4,4'-(3,3,5-trimethyl cyclohexane-1,1-diyl) diphenol, the molar ratio M2/M1 preferably being greater than 0.3, in particular greater than 0.40, for instance greater than 0.50.

8. The method according to one of claims 1 to 7, wherein the temperature in step f) is in the range from 140 °C to 200 °C, in particular in the range from 150 °C to 180 °C.

9. The method according to one of claims 1 to 8, wherein the first polycarbonate layer (1) and the second polycarbonate layer (2) have a glass temperature T_{g} of greater than 145 °C.

10. The method according to one of claims 1 to 9, wherein the thickness of the first polycarbonate layer (1) and of the second polycarbonate layer (2) is, identical or different, in the range from 10 to 1,000 µm, in particular from 20 to 200 µm, and/or wherein the thickness, measured in directions orthogonal to a main face of a polycarbonate layer (1, 2), of the intermediate layer (3) is in the range from 0.1 to 1,000 µm, in particular from 1 to 50 µm.

11. A composite obtainable according to one of claims 1 to 10.

12. A composite comprising a first polycarbonate layer (1), a second polycarbonate layer (2), an intermediate layer (3) disposed between the first polycarbonate layer (1) and the second polycarbonate layer (2) and a preparation layer (4) connecting the intermediate layer (3) with the second polycarbonate layer (2) and comprising a polycarbonate derivative based on a geminally disubstituted dihydroxy diphenyl cycloalkane.

13. The use of a method according to one of claims 1 to 10 for producing a security and/or value document, wherein optionally, simultaneously with or before or after the production of the composite, the first polycarbonate layer (1) and/or the second polycarbonate layer (2) are directly or indirectly connected with at least one additional layer, for instance a supporting layer.

14. A security and/or value document obtainable according to claim 13.

15. A security and/or value document comprising a composite according to claim 11 or 12.

## Revendications

1. Procédé de production d'un matériau composite comprenant au moins une première couche polymérique (1) aussi bien qu'une deuxième couche polymérique (2), chacune en un polymère de polycarbonate sur la base de bisphénol A, entre la première couche polymérique (1) et la deuxième couche polymérique (2) une couche intermédiaire (3) étant disposée, le procédé comprenant les étapes suivantes:
a) sur au moins une partie de la première couche polymérique (1), la couche intermédiaire (3) est mise en place,
b) optionnellement, la couche intermédiaire (3) est séchée,
c) sur le côté sur lequel la couche intermédiaire (3) est disposée, la première couche polymérique (1) est enduite d'une préparation liquide contenant un solvant, ou un mélange de solvants, et un dérivé de polycarbonate sur la base d'un dihydroxy-diphényle-cycloalcane disubstitué de manière géminée, la préparation recouvrant la couche intermédiaire (3),
d) optionnellement, après l'étape c), une étape de séchage a lieu,
e) après l'étape c) ou l'étape d), la deuxième couche polymérique (2) est mise en place sur la première couche polymérique (1), en recouvrant la couche intermédiaire (3),
f) la première couche polymérique (1) et la deuxième couche polymérique (2) sont laminées l'une avec l'autre sous pression à une température comprise entre 120 °C et 230 °C et pendant un temps défini.

2. Procédé selon la revendication 1, dans lequel la couche intermédiaire (2) est une couche imprimée, en particulier comprenant un élément imprimé de sécurité et/ou une représentation photographique imprimée, une émulsion photographique et/ou un film, en particulier un film diffractif de sécurité.

3. Procédé selon la revendication 1 ou 2, dans lequel le dérivé de polycarbonate a un poids moléculaire (poids moyen) d'au moins 10.000, de préférence 20.000 à 300.000.

4. Procédé selon une des revendications 1 à 3, dans lequel le dérivé de polycarbonate contient des unités structurelles fonctionnelles de carbonate de la formule (I), 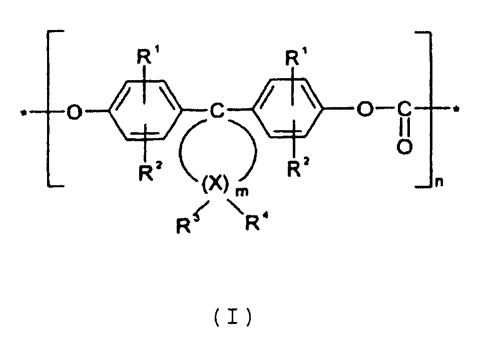 dans laquelle
R¹ et R² représentent indépendamment l'un de l'autre hydrogène, halogène, de préférence chlore ou brome, alkyle en C₁ à C₈, cycloalkyle en C₅ à C₆, aryle en C₆ à C₁₀, de préférence phényle, et aralkyle en C₇ à C₁₂, de préférence phényle-alkyle en C₁ à C₄, en particulier benzyle,
m est un entier compris entre 4 et 7, de préférence 4 ou 5,
R3 et R4 sont individuellement choisissables pour chaque X, indépendamment l'un de l'autre hydrogène ou alkyle en C₁ à C₆,
X est carbone, et
n est un entier supérieur à 20,
pourvu que R³ et R⁴ sur au moins un atome X sont simultanément alkyle.

5. Procédé selon la revendication 4, dans lequel R³ et R⁴ sur 1 à 2 atomes X, en particulier seulement sur un atome X, sont simultanément alkyle, et/ou dans lequel R³ et R⁴ sont méthyle et/ou dans lequel les atomes X dans la position alpha à l'atome C (C1) substitué en diphényle ne sont pas substitués en dialkyle et/ou dans lequel les atomes X dans la position bêta à C1 sont disubstitués en alkyle et/ou dans lequel m =4 ou 5.

6. Procédé selon une des revendications 4 ou 5, dans lequel le dérivé de polycarbonate est sur la base de 4,4'-(3,3,5-triméthylecyclohexane-1,1-diyl)diphénol, 4,4'-(3,3-diméthylecyclohexane-1,1-diyl)diphénol, ou 4,4'-(2,4,4-triméthylecyclopentane-1,1-diyl)diphénol.

7. Procédé selon une des revendications 1 à 6, dans lequel le dérivé de polycarbonate est un copolymère contenant, en particulier se composant d'unités monomères M1 sur la base de la formule (Ib), aussi bien que d'unités monomères M2 sur la base du dihydroxy-diphényle-cycloalcane disubstitué de manière géminée, de préférence du 4,4'-(3,3,5-triméthylecyclohexane-1,1-diyl) diphénol, la proportion molaire M2/M1 de préférence étant supérieure à 0,3, en particulier supérieure à 0,40, de préférence supérieure à 0,50.

8. Procédé selon une des revendications 1 à 7, dans lequel la température dans l'étape f) est dans la gamme comprise entre 140 °C et 200 °C, en particulier dans la gamme comprise entre 150 °C et 180 °C.

9. Procédé selon une des revendications 1 à 8, dans lequel la première couche de polycarbonate (1) et la deuxième couche de polycarbonate (2) ont une température de transition vitreuse T_{g} supérieure à 145 °C.

10. Procédé selon une des revendications 1 à 9, dans lequel l'épaisseur de la première couche de polycarbonate (1) et de la deuxième couche de polycarbonate (2) est, identique ou différente, dans la gamme comprise entre 10 et 1000 µm, en particulier dans la gamme comprise entre 20 et 200 µm, et/ou dans lequel l'épaisseur, mesurée dans des directions orthogonales à une face principale d'une couche de polycarbonate (1, 2), de la couche intermédiaire (3) est dans la gamme comprise entre 0,1 et 1.000 µm, en particulier 1 et 50 µm.

11. Matériau composite obtenable selon une des revendications 1 à 10.

12. Matériau composite comprenant une première couche de polycarbonate (1), une deuxième couche de polycarbonate (2), une couche intermédiaire (3) disposée entre la première couche de polycarbonate (1) et la deuxième couche de polycarbonate (2) et une couche de préparation (4) liant la couche intermédiaire (3) avec la deuxième couche de polycarbonate (2) et comprenant un dérivé de polycarbonate sur la base d'un dihydroxy-diphényle-cycloalcane disubstitué de manière géminée.

13. Utilisation d'un procédé selon une des revendications 1 à 10 pour produire un document de sécurité et/ou de valeur, dans lequel optionnellement simultanément avec ou avant ou après la production du matériau composite, la première couche de polycarbonate (1) et/ou la deuxième couche de polycarbonate (2) sont directement ou indirectement liées avec au moins une couche additionnelle, par exemple une couche de support.

14. Document de sécurité et/ou de valeur obtenable selon la revendication 13.

15. Document de sécurité et/ou de valeur comprenant un matériau composite selon la revendication 11 ou 12.
